**Europäisches Patentamt**

**European Patent Office**

**Office européen des brevets**

(11) Publication number: **0 196 376 B1**

(12) **EUROPEAN PATENT SPECIFICATION**

(45) Date of publication of patent specification: **13.12.89**

(21) Application number: **85302190.5**

(22) Date of filing: **28.03.85**

(51) Int. Cl.⁴: **C 09 D 5/16, A 01 N 37/18, A 01 N 37/44**

(54) **Article coated with an antifouling composition for use in seawater.**

(43) Date of publication of application:
**08.10.86 Bulletin 86/41**

(45) Publication of the grant of the patent:
**13.12.89 Bulletin 89/50**

(84) Designated Contracting States:
**AT BE CH DE FR GB IT LI LU NL SE**

(56) References cited:
**US-A-4 284 444**

**CHEMICAL ABSTRACTS, vol. 80, no. 18, 6th May 1974, page 90, no. 97519p, Columbus, Ohio, US; & JP - A - 73 97 934 (YOSHITAKE, TADASHI) 13-12-1973**

(73) Proprietor: **STARBRITE INTERNATIONAL N.V.**
**16-A Pietermaai**
**Curaçao Netherlands Antilles (NL)**

(72) Inventor: **Grams, Ralph R.**
**2025 N.W. 24th Street**
**Gainesville Florida, 32605 (US)**

(74) Representative: **Shaw, Laurence**
**George House George Road**
**Edgbaston Birmingham B15 1PG (GB)**

## Description

The invention relates to an antifouling composition for application to surfaces exposed to seawater and adapted to discourage or prevent the attachment of marine life, e.g. crustacea such as barnacles to such surfaces. Compositions for this purpose are known, but those based on mercury present a hazard to all marine life and not just to the organisms likely to attach themselves to the surfaces in question. US-A-4284444 discloses a composition for application to a substrate which composition contains an active agent which migrates to the surface of the applied layer. In one example, the agent is an antibiotic.

According to one aspect of the invention there is provided an article having a surface to be placed in contact with seawater, the article being for example a boat, a coating of an antifouling marine paint being present on the surface, characterised in that a dispersion of particles of a polycyclic naphthacenecarboxamide is present in the paint whereby on exposure to salt water the coating is attacked and the particles of the polycyclic naphthacenecarboxamide are exposed.

The polycyclic naphthacenecarboxamide is preferably a nontoxic agent, e.g tetracycline or a functional derivative such as a salt, e.g a phosphate or hydrochloride or a hydrate thereof because tetracycline is active in seawater over a prolonged period. More than one substance may be present.

The coating material is preferably a high quality marine paint, a varnish, a plastic coating material or the like. The agent is intimately dispersed in the coating material. It is preferred that the agent be ground into a powder of small particle size, e.g less than about 0.127 mm (0.005 inch) in diameter, and preferably about 0.0254 to 0.1 mm (0.001-0.004 inch) in diameter. The agent may be dispersed in the coating material by any efficient type or stirring or agitation. The paint is then ready to be applied by means, such as brushing, rolling or spraying.

The agent is dispersed in the coating material and is available at the surface to prevent the growth of marine life and will continue to do so as the coating becomes worn or is abraded or flaked away or otherwise attacked by the seawater to expose new particles of the antifouling agent to provide a continuing activity in preventing marine growth.

It has been found that a very small amount of the agent is capable of preventing marine growth. As little as 250 mg. per quart, preferably 500 mg to 1 g of agent per 946 ml, is effective to prevent the growth of marine life. Higher concentrations increase the solids content of the coating material which is disadvantageous.

While we do not wish the scope of the invention to be limited by the following theory, our investigations suggest that particles of the agent are held in the matrix of the paint coating applied to the article. As the surface of the coating is worn, for example by erosion caused by water flow, particles of the agent are exposed at the surface of the coating. The agent causes a surface sterilization of the surface, which inhibits the growth of all marine life thereon without however being toxic. With time the agent loses its effectiveness (tetracycline is deactivated in seawater in about 24 to about 48 hours) but is replaced by fresh particles of agent brought to the surface of the coating, so providing continuous protection.

The substrate is typically the hull of a boat, piling, docks and the like that are subjected to the action of seawater. The inhibitory effect can be maintained over long periods of time if the coating of this invention is lightly brushed or sponged every two or three months to wipe off slime etc.

The invention is illustrated with reference to the accompanying diagrammatic drawing. The hull of a ship 11 has a finish or layer 12. If surface 11 is aluminium, finish 12 might be aluminium oxide. If surface 11 is wood, layer 12 might be a wood finish or a residue of impurities remaining after scraping the hull following contact with seawater. If surface 11 is fibreglass, layer 12 may be the remnants of a paint finish. A coating 13 is the composition of this invention which protects surface 11 from the action of seawater 14. Coating 13 contains dispersed throughout its thickness small particles of an agent 15. Many of particles 15 are near the surface of coating 13 and are continually leached by the seawater to provide an inhibitory action to prevent marine life in seawater 14 attaching itself to coating 13. It is believed that the long life and continuing effect of the coating is localised to the interface between coating 13 and seawater 14 which is worn, eroded, or abraded so that new particles 15 are exposed to seawater 14.

The invention is further illustrated by the following examples.

## Example 1

In a series of tests a fibreglass cylinder approximately 183 cm (six feet) long and 30 cm (one foot) in diameter was sanded. One section of the cylinder was covered with a quality bottom paint for ships containing 250 mg tetracycline, another with the same type paint containing sulfanilamide in place of tetracycline, and another with the same paint except that penicillin was used rather than tetracycline. The sections were separated by uncoated control sections. The cylinder was then suspended horizontally in seawater in an area near St. Augustine, Florida, United States of America where the marine growth problems are particularly acute, and observations were made during the succeeding year and a half. All during that time the section which contained tetracycline in accordance with this invention remained absolutely clear and free of any marine growth. The two sections that were covered with paint containing sulfanilamide or penicillin exhibited some antifouling protection as evidenced by the fact that marine growth was present but was not heavily encrusted. The control sections of the cylinder were very heavily encrusted with barnacles and other marine life to a thickness of at least 25 mm (one inch).

Example 2

Tetracycline or tetracycline hydrochloride dispersed in ordinary house paint was applied to a cylinder as described above. The marine growth was inhibited very well at concentrations of about 500 mg to 1.0 g of agent per quart of paint but the inhibitory effect was not quite as good as that found when the basic paint composition was a quality marine bottom paint.

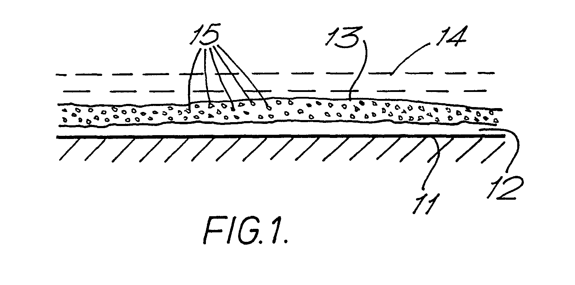

**Claims**

1. An article having a surface to be placed in contact with seawater, the article being for example a boat, a coating of an anti-fouling marine paint being present on the surface, characterised in that a dispersion of particles of a polycyclic naphthacenecarboxamide is present in the paint whereby on exposure to salt water the coating is attacked and the particles of the polycyclic naphthacenecarboxamide are exposed.

2. An article according to Claim 1, characterised in that the polycyclic naphthacenecarboxamide is tetracycline or a functional derivative thereof.

3. An article according to Claim 1 or 2, characterised in that the coating contains at least 250 mg of particles per 946 ml of coating material.

4. An article according to any preceding Claim, characterised in that the particles are smaller than about 0.127 mm, preferably 0.0254 to 0.1 mm in diameter.

5 Use of a coating composition comprising a dispersion of a polycyclic naphthacenecarboxamide dispersed in a paint characterised in that the paint is applied to a surface of an article to be contacted with sea water whereby the sea water attacks the paint to expose the particles of polycyclic naphthacenecarboxamide to prevent marine growth on the surface.

6. Use according to Claim 5 characterised in that the polycyclic naphthacenecarboxamide is tetracycline or a functional derivative thereof.

**Patentansprüche**

1. Ein Gegenstand, dessen Oberfläche mit Seewasser in Berührung kommt, z. B. ein Boot mit einem Anstrich aus nichtfaulender Schiffsfarbe, dadurch gekennzeichnet, daß die Farbe eine Dispersion eines polyzyklischen Naphthacenkarboxamids enthält, wodurch der Anstrich durch Kontakt mit Seewasser angegriffen und die polyzyklischen Naphthacenkarboxamid-Teilchen freigelegt werden.

2. Ein Gegenstand gemäß Patentanspruch 1, dadurch gekennzeichnet, daß das polyzyklische Naphthacenkarboxamid ein Tetrazyclin oder ein aktives Derivat desselben ist.

3. Ein Gegenstand gemäß Anspruch 1 dadurch gekennzeichnet, daß der Anstrich mindestens 250 mg Teilchen pro 946 ml des Anstriches enthält.

4. Ein Gegenstand gemäß den vorstehenden Ansprüchen, dadurch gekennzeichnet, daß der Teilchendurchmesser kleiner als 0,127 mm ist und bevorzugterweise zwischen 0,0254 und 0,1 mm liegt.

5. Verwendung von Anstrichen mit einer Dispersion eines polyzyklischen Naphthacenkarboxamids, in Farbe dispergiert, dadurch gekennzeichnet, dass der Anstrich auf die Oberflache eines Gegenstandes aufgetragen wird, der mit Seewasser in Kontakt kommt, wobei das Seewasser die Farbe angreift und die polyzyklischen Naphthacenkarboxamid-Teilchen freilegt, um den Wuchs von Meeresorganismen auf der Oberfläche zu vermeiden.

6. Verwendung gemass Anspruch 5, dadurch gekennzeichnet, dass das polyzyklische Naphthacenkarboxamid ein Tetrazyclin oder ein aktives Derivat desselben ist.

**Revendications**

1. Objet ayant une surface appelée à être en contact avec de l'eau de mer, cet objet étant par exemple un bateau dont la surface est recouverte d'une couche de peinture marine anti-salissures, caractérisé en ce que la peinture contient une dispersion de particules de carboxamide de naphtacène polycyclique et, de ce fait, en étant exposé à l'eau salée, la couche de peinture est attaquée et les particules de carboxamide de naphtacène polycyclique sont exposées.

2. Objet, selon la revendication 1, caractérisé en ce que le carboxamide de naphtacène polycyclique est constitué de tétracycline ou d'un dérivé fonctionnel de celle-ci.

3. Objet, selon les revendications 1 et 2, caractérisé en ce que la couche de peinture contient au moins 250 mg de particules pour 946 ml de matière de revêtement.

4. Objet, selon toute revendication précédente, caractérisé en ce que la taille des particules est inférieure à environ 0,127 mm, ayant de préférence un diamètre de 0,0254 à 0,1 mm.

5. Utilisation d'une composition de revêtement contenant une dispersion de carboxamide de naphtacène polycyclique distribuée dans une peinture caractérisée en ce que la peinture est appliquée sur la surface d'un objet appelé à être en contact avec de l'eau de mer et que l'eau de mer attaque la peinture pour exposer les particules de carboxamide de naphtacène polycyclique pour empêcher la formation d'excroissances marines sur la surface.

6. Usage, selon la revendication 5, caractérisé en ce que le carboxamide de naphtacène polycyclique est constitué de tétracycline ou d'un dérivé fonctionnel de celle-ci.

EP 0 196 376 B1

FIG.1.

1